# DEMANDE DE BREVET EUROPEEN

(11) **EP 3 199 886 A1**
(43) Date de publication de la demande: **02.08.2017**
(21) Numéro de dépôt: 16153637.0
(22) Date de dépôt: 01.02.2016
(51) Int. Cl.: F24J 2/52

(54) **PANNEAU SOLAIRE ET STRUCTURE DE TOIT COMPRENANT UN AGENCEMENT DE PANNEAUX SOLAIRES**

(71) Demandeur: Sunergic SA, 1800 Vevey (CH)
(72) Inventeur: Chevalley, Didier, 1083 Mézières (CH)
(74) Mandataire: Ganguillet, Cyril

(57) **Abrégé**

La présente invention est relative à un panneau solaire (10) défini notamment par une face supérieure (10a), une face inférieure (10b), une extrémité supérieure (11 c) et une extrémité inférieure (11 d),
dans lequel un élément de montage (15) est fixé de manière amovible sur ledit panneau solaire (10), ledit élément de montage (15) étant configuré pour définir, en combinaison avec ladite face inférieure (10b), un logement (17) apte à recevoir l'extrémité supérieure (11c) d'un panneau similaire audit panneau solaire (10), empêchant ainsi tout mouvement relatif entre lesdits panneaux dans une direction perpendiculaire à ladite face supérieure (10a).

## Description

### Domaine technique

La présente invention concerne un panneau solaire et une structure de toit comprenant un agencement de panneaux solaires disposés selon un alignement de rangées et de colonnes.

### Etat de la technique

Les modules photovoltaïques offrent une alternative de plus en plus attractive pour la production d'électricité. Généralement, les modules photovoltaïques sont formés d'une multitude de cellules de silicium cristallin prises en sandwich entre deux ou plusieurs couches ou feuilles d'un laminé. Ce laminé est ensuite entouré d'un cadre de manière à, d'une part, rigidifier le module et, d'autre part, protéger la tranche du laminé. L'ensemble formé par le module photovoltaïque entouré de son cadre constitue ainsi un panneau solaire. Les cadres des panneaux solaires sont souvent constitués par un assemblage de plusieurs profilés en aluminium, chacun des profilés venant se fixer aux autres par collage et/ou au moyen d'éléments mécaniques de fixation, tels que des vis ou des équerres. Ce type de fixation présente toutefois l'inconvénient d'être relativement long et compliqué à mettre en oeuvre. Par ailleurs, les éléments de fixation, généralement en acier, peuvent se corroder avec le temps et entraîner leur désolidarisation du cadre. Il faut alors opérer une réparation, voire un remplacement, du cadre du panneau solaire. Avec les agencements actuels de panneaux solaires, dans lesquels les panneaux sont disposés à la manière de tuiles chevauchantes alignées selon une série de rangées et de colonnes, cette réparation ou ce remplacement ne peut s'opérer qu'en démontant tous les panneaux de la colonne dont fait partie le panneau solaire défectueux. Dans le cas d'agencement de panneaux solaires comportant un grand nombre de rangées de panneaux, cette opération peut donc s'avérer compliquée et onéreuse à mettre en oeuvre. Pour résoudre ce problème, certains agencements prévoient d'équiper les panneaux de trous de fixation de forme ovale ce qui permet de coulisser chacun des panneaux vers le haut une fois les vis de fixation desserrées. Cette solution permet donc de retirer un panneau individuellement sans avoir à démonter tous les panneaux qui sont alignés avec lui. Toutefois, dans cette solution, le coulissement des panneaux vers le haut s'avère difficile à réaliser du fait que les trous de fixation subissent un encrassement important à moyen ou long terme. Il est donc souvent nécessaire de soumettre le panneau à des pressions ou des frappes successives de manière à le forcer à coulisser vers le haut. Une détérioration partielle du panneau peut donc se produire durant cette opération.

La présente invention vise donc à fournir une solution simple et efficace au problème mentionné précédemment et ne présentant pas les inconvénients de la solution exposée ci-dessus.

### Divulgation de l'invention

A cet effet, conformément à l'invention, il est proposé un panneau solaire défini notamment par une face supérieure, une face inférieure, une extrémité supérieure et une extrémité inférieure,
dans lequel un élément de montage est fixé de manière amovible sur ledit panneau solaire, ledit élément de montage étant configuré pour définir, en combinaison avec ladite face inférieure, un logement apte à recevoir l'extrémité supérieure d'un panneau similaire audit panneau solaire, empêchant ainsi tout mouvement relatif entre lesdits panneaux dans une direction perpendiculaire à ladite face supérieure.

D'autres configurations avantageuses de la présente invention sont définies dans les revendications dépendantes 2 à 9.

L'invention concerne également une structure de toit comprenant un agencement de panneaux solaires, lesdits panneaux étant disposés selon un alignement de rangées et de colonnes, dans laquelle deux panneaux adjacents d'une même colonne, respectivement un panneau supérieur et un panneau inférieur, sont assemblés au moyen d'un élément de montage fixé de manière amovible sur le panneau supérieur et disposé à la jonction entre lesdits panneaux adjacents,
dans laquelle ledit élément de montage est configuré pour définir, en combinaison avec la face inférieure dudit panneau supérieur, un logement apte à recevoir l'extrémité supérieure dudit panneau inférieur.

### Brève description des dessins

D'autres caractéristiques et avantages de la présente invention seront mieux compris à la lecture d'un mode particulier de réalisation de l'invention et en référence aux dessins dans lesquels :
- la figure 1 est une vue en perspective d'un panneau solaire selon l'invention ;
- la figure 2 est une vue agrandie de l'extrémité inférieure du panneau solaire représenté sur la figure 1, le profilé inférieur du cadre entourant le module photovoltaïque étant déconnecté du reste du cadre;
- la figure 3 est une vue en perspective du profilé inférieur du cadre représenté sur la figure 2;
- la figure 4 est une vue en perspective d'une partie d'une structure de toit formée par l'assemblage de plusieurs panneaux solaires selon l'invention ;
- la figure 5 est une vue en perspective d'une partie d'un profilé latéral du cadre du panneau solaire représenté sur la figure 1 ;
- la figure 6 est une vue agrandie du profilé latéral représenté sur la figure 5 au moment de l'assemblage dudit profilé latéral avec le profilé supérieur du cadre.

### Description détaillée d'un mode d'exécution de l'invention

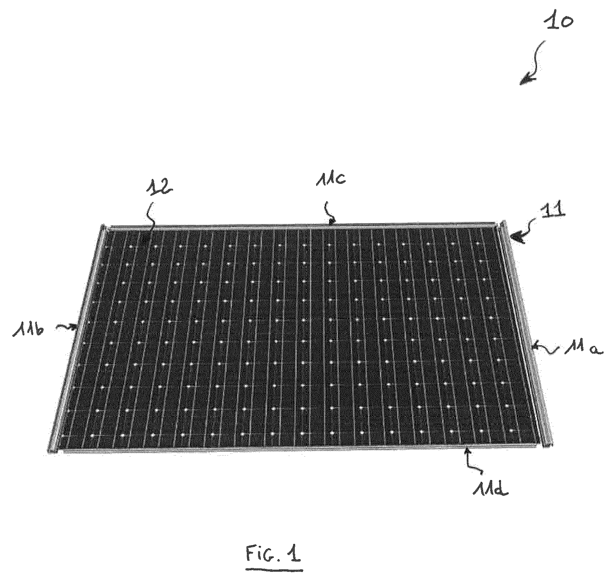

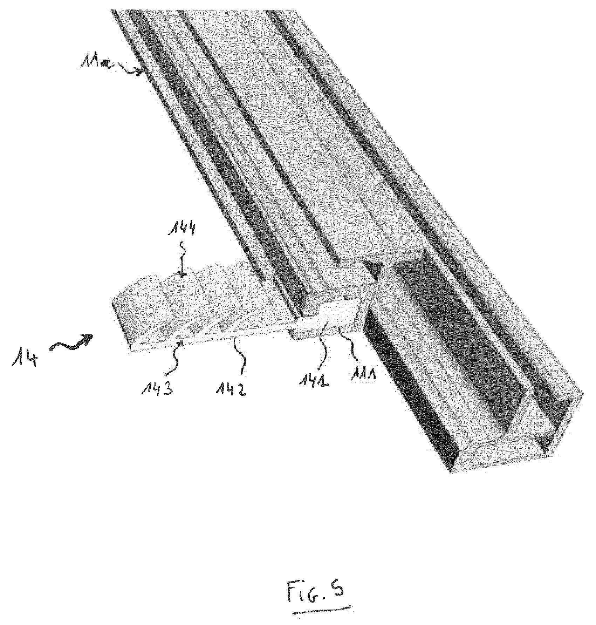

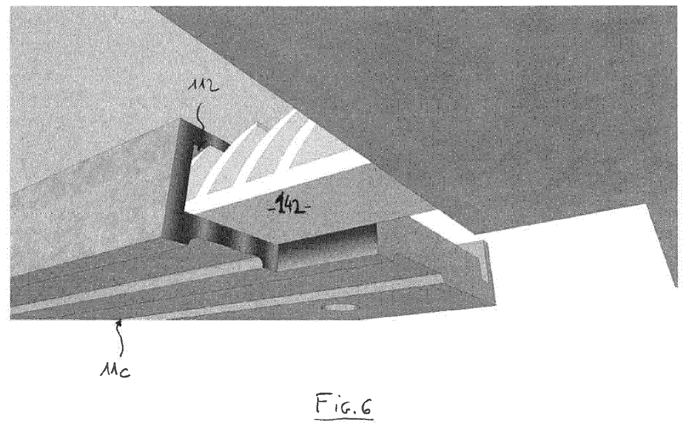

En référence à la figure 1, il est représenté un panneau solaire conforme à l'invention. Ce panneau solaire 10 est formé d'un cadre 11 entourant un module photovoltaïque 12 de forme sensiblement parallélépipédique rectangulaire ou carrée. Le module photovoltaïque 12 comprend une pluralité de cellules photovoltaïques à base de matériau semi-conducteur. Le cadre 11 est formé par l'assemblage de deux profilés latéraux 11 a, 11 b disposés le long des bords latéraux du module photovoltaïque 12 et de deux profilés longitudinaux, respectivement un profilé supérieur 11c et un profilé inférieur 11d, disposés le long des côtés longitudinaux du module photovoltaïque 12. Les profilés latéraux et longitudinaux du cadre 11 pourront par exemple être réalisés en aluminium. Pour permettre l'assemblage du cadre, il sera avantageux d'équiper les profilés du cadre de moyens d'assemblage complémentaires. En référence aux figures 5 et 6, de tels moyens d'assemblage pourront consister notamment en un élément d'assemblage 14 comprenant une première extrémité 141 destinée à venir s'insérer en force à l'intérieur d'une rainure 111 d'un des profilés latéraux 11 a, 11 b et une deuxième extrémité 142 se présentant sous la forme d'un griffe apte à venir s'insérer en force à l'intérieur d'une ouverture 112 formée à l'intérieur d'un des profilés longitudinaux 11c, 11d. La deuxième extrémité 142 sera notamment formée d'un support 143 sensiblement plan et d'une pluralité d'ailettes de retenue 144 formant des saillies sur ledit support. Dans une autre configuration (non représentée) de l'invention, il sera envisageable d'inverser la disposition de l'élément d'assemblage 14, de telle manière que l'extrémité 141 soit fixée sur l'un des profilés longitudinaux 11c, 11d et l'extrémité 142 soit fixée sur l'un des profilés latéraux 11a, 11 b. Il sera également envisageable d'utiliser un élément d'assemblage 14 dont les deux extrémités 141, 142 se présenteront sous la forme d'une griffe. Dans ce cas, il sera avantageux que les ailettes de retenue des première et deuxième extrémités 141, 142 soient disposées de manière oblique par rapport à la face plane formée par le support 143, les ailettes de retenue de la deuxième extrémité 142 possédant une orientation opposée à celles de la première extrémité 141. Il va de soi que chaque profilé latéral et/ou longitudinal pourra être équipé de plusieurs éléments d'assemblage 14. En particulier, dans la configuration représentée, chacun des profilés latéraux 11a, 11 b possède un élément d'assemblage supérieur apte à venir s'insérer en force dans le profilé supérieur 11 c et un élément d'assemblage inférieur apte à venir s'insérer en force dans le profilé inférieur 11 d.

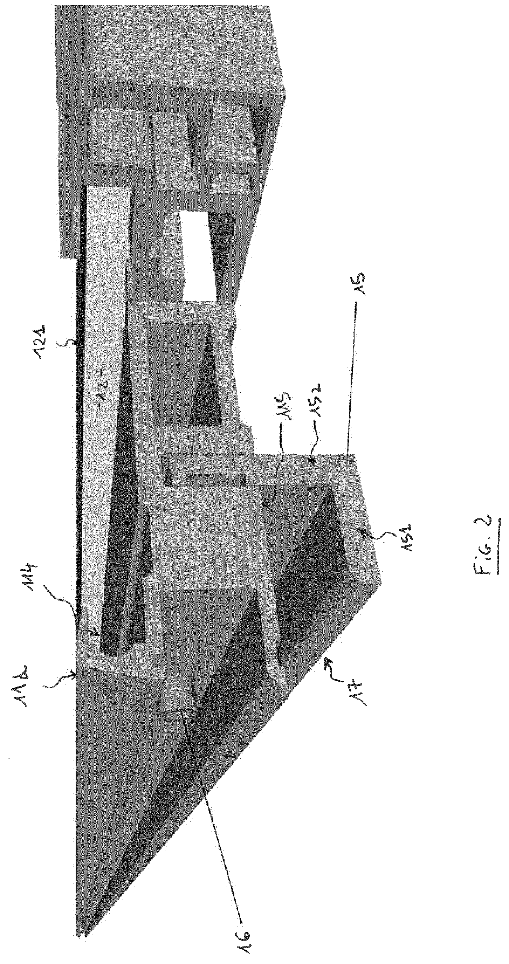

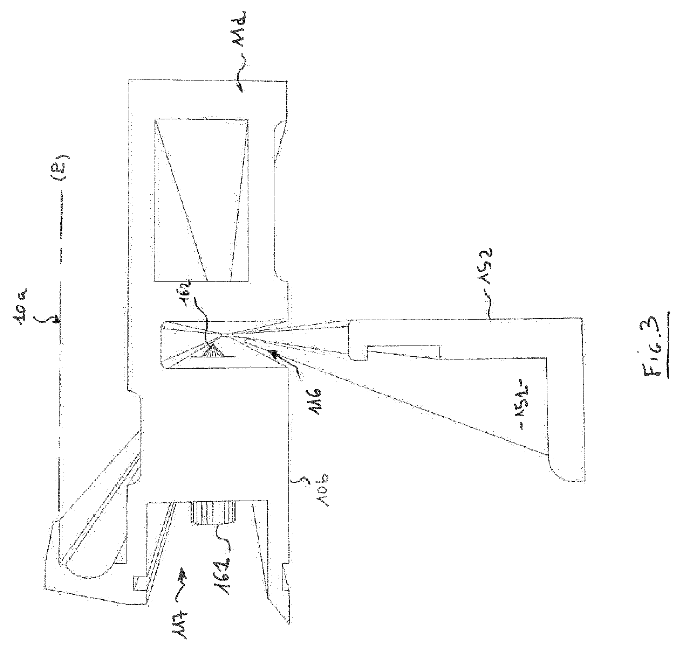

En référence à la figure 2, il est représenté l'extrémité inférieure du panneau solaire représenté sur la figure 1. Il ressort de cette figure que chacun des bords latéraux du module photovoltaïque 12 est emboîté à l'intérieur d'une gorge 113 formée par deux ailes d'un des profilés latéraux 11 a, 11 b du cadre 11. De manière similaire, chacun des bords longitudinaux du module photovoltaïque 12 est également configuré pour venir s'emboîter à l'intérieur d'une gorge 114 formée par deux ailes d'un des profilés longitudinaux 11c, 11d du cadre 11. Par ailleurs, il apparaît que le profilé inférieur 11 d est muni, dans la position normale d'utilisation du panneau solaire, d'un élément de montage 15 démontable. Comme expliqué en détail plus avant, cet élément de montage 15 définit en combinaison avec la face inférieure du panneau solaire un logement 17 apte à recevoir l'extrémité supérieure d'un panneau solaire disposé de manière adjacente au panneau 10 dans une des colonnes d'une structure de toit comprenant un agencement de panneaux solaires disposés selon un alignement de rangées et de colonnes. Tel que représenté sur la figure 3, l'élément de montage 15 se présente sous la forme d'un profilé en forme de L, dans lequel une des branches 151 est, dans la position montée représentée sur la figure 2, sensiblement parallèle au plan P défini par la face supérieure 10a du panneau 10, laquelle correspond sensiblement à la face supérieure 121 du module photovoltaïque 12. Cette branche 151 est également parallèle à la face inférieure 115 du profil inférieur 11d, ladite face inférieure 115 correspondant sensiblement à la face inférieure 10b du panneau 10. L'autre branche 152 de l'élément de montage 15 est sensiblement perpendiculaire à la branche 151 et vient se loger à l'intérieur d'une fente 116 du profilé inférieur 11 d dans la position montée représentée sur la figure 2. L'élément de montage 15 est maintenu dans sa position montée au moyen d'au moins deux vis 16, en particulier des vis à six pans creux, dont la tête 161 débouche à l'intérieur d'une rainure frontale 117 du profilé inférieur 11d et dont la tige filetée 162 est vissée à l'intérieur d'un trou fileté débouchant à l'une de ses extrémités sur ladite rainure frontale 117 et à l'autre extrémité sur la fente 116. Comme décrit par la suite, cet élément de montage 15 pourra donc être facilement déconnecté du panneau 10 de manière à permettre un mouvement relatif selon une direction perpendiculaire au plan P entre ledit panneau 10 et le panneau adjacent disposé sous lui dans une structure de toit formée d'un agencement de panneaux solaires disposés selon un alignement de rangées et de colonnes. Ce mouvement relatif permettra notamment de retirer ledit panneau adjacent sans avoir à retirer tous les panneaux alignés avec lui dans une des colonnes de l'agencement défini par la structure de toit.

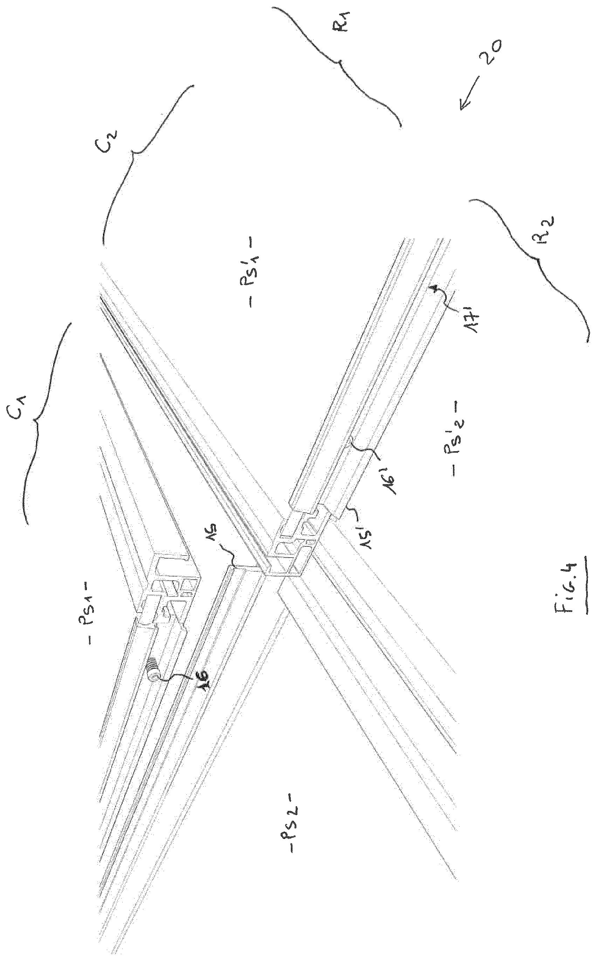

En référence à la figure 4, il est représenté une partie d'une structure de toit conforme à l'invention. Cette structure 20 est formée d'un agencement de plusieurs panneaux solaires conformes à l'invention, ledit agencement comprenant au moins deux rangées R1, R2 de panneaux et au moins deux colonnes C1, C2 de panneaux. Dans la colonne C2, les panneaux adjacents Ps'1 et Ps'2 sont dans leur position normale d'utilisation, dans laquelle l'extrémité supérieure du panneau Ps'2 est engagée à l'intérieur du logement 17' défini partiellement par l'élément de montage 15' fixé sur le panneau Ps'1 au moyen des vis 16'. En revanche, dans la colonne C1, les panneaux adjacents Ps1 et Ps2 sont dans une position partiellement démontée, dans laquelle les vis 16 ont été partiellement dévissées de manière à permettre le démontage de l'élément de montage 15 du panneau Ps1. De cette manière, un soulèvement de l'extrémité inférieure du panneau Ps1 a pu être effectué, sans bouger le panneau Ps2. Ce soulèvement a libéré suffisamment d'espace entre lesdits panneaux Ps1 et Ps2 pour qu'un opérateur puisse accéder aux vis de fixation reliant le panneau Ps2 à un châssis sous-jacent faisant partie de la structure de toit 20. Une fois ces vis de fixation retirées au moyen d'un tournevis, le panneau Ps2 pourra être coulissé en direction du panneau Ps1 de manière à permettre l'enlèvement du panneau Ps2 de la structure de toit 20. Ce panneau Ps2 pourra donc être par la suite remplacé par un autre ou réparé et remis en place en effectuant les étapes inverses à celles précédemment décrites. Une fois que les panneaux Ps1 et Ps2 seront à nouveau dans la position représentée sur la figure 4, il suffira d'abaisser l'extrémité inférieure du panneau Ps1 de manière à ce que l'élément de montage 15 vienne se loger à nouveau dans la rainure formée à l'intérieur du profilé inférieur 11 d du panneau Ps1 et de resserrer les vis 16 de manière à fixer ledit élément de montage 15 sur le panneau Ps1. Ainsi, les panneaux Ps1 et Ps2 seront positionnés sensiblement de la même manière que les panneaux Ps'1 et Ps'2.

## Revendications

1. Panneau solaire (10) défini notamment par une face supérieure (10a), une face inférieure (10b), une extrémité supérieure (11 c) et une extrémité inférieure (11 d),
dans lequel un élément de montage (15) est fixé de manière amovible sur ledit panneau solaire (10), ledit élément de montage (15) étant configuré pour définir, en combinaison avec ladite face inférieure (10b), un logement (17) apte à recevoir l'extrémité supérieure (11c) d'un panneau similaire audit panneau solaire (10), empêchant ainsi tout mouvement relatif entre lesdits panneaux dans une direction perpendiculaire à ladite face supérieure (10a).

2. Panneau (10) selon la revendication 1, dans lequel l'élément de montage (15) est fixé sur ledit panneau (10) au moyen de vis (16).

3. Panneau (10) selon la revendication 2, dans lequel les vis sont des vis à six pans creux (16).

4. Panneau (10) selon l'une quelconque des revendications précédentes, dans lequel l'élément de montage (15) est un profilé en forme de L, une première branche (151) du profilé étant parallèle au plan (P) défini par la face supérieure (10a) du panneau (10) et une seconde branche (152) du profilé étant perpendiculaire à ladite première branche (151), ladite seconde branche (152) étant logée à l'intérieur d'une fente (116) du panneau (10) lorsque l'élément de montage (15) est fixé sur ledit panneau (10).

5. Panneau (10) selon l'une quelconque des revendications précédentes, comprenant un module photovoltaïque (12) entouré d'un cadre (11), ledit cadre (11) étant formé d'au moins un profilé longitudinal (11c, 11 d) et d'au moins un profilé latéral (11a, 11 b) assemblés ensemble au moyen d'au moins un élément d'assemblage (14).

6. Panneau (10) selon la revendication précédente, dans lequel ledit élément d'assemblage (14) comprend au moins une extrémité (142) en forme de griffe, ladite extrémité (142) étant formée d'un support (143) sensiblement plan et d'une pluralité d'ailettes de retenue (144) formant des saillies sur ledit support (143), ladite extrémité (142) étant apte à venir s'insérer en force à l'intérieur d'une ouverture (112) correspondante formée à l'intérieur dudit profilé longitudinal et/ou latéral du cadre (11).

7. Panneau (10) selon la revendication précédente, dans lequel l'élément d'assemblage (14) comprend au moins deux extrémités en forme de griffe, lesdites extrémités définissant au moins deux séries d'ailettes de retenue, à savoir une première série d'ailettes de retenue destinées à venir s'insérer en force à l'intérieur d'une ouverture correspondante dudit profilé longitudinal et une deuxième série d'ailettes de retenue destinées à venir s'insérer en force à l'intérieur d'une ouverture correspondante dudit profilé latéral.

8. Panneau (10) selon la revendication précédente, dans lequel les première et deuxième séries d'ailettes de retenue sont disposées en saillie et de manière oblique par rapport à une face plane dudit élément d'assemblage.

9. Panneau (10) selon la revendication précédente, dans lequel les ailettes de retenue de la deuxième série ont une orientation opposée à celles de la première série.

10. Structure de toit (20) comprenant un agencement de panneaux solaires (Ps1, Ps2, Ps'1, Ps'2) selon l'une quelconque des revendications précédentes, lesdits panneaux étant disposés selon un alignement de rangées (R1, R2) et de colonnes (C1, C2) , dans laquelle deux panneaux adjacents (Ps1,Ps2 ;Ps'1,Ps'2) d'une même colonne, respectivement un panneau supérieur (Ps1, Ps'1) et un panneau inférieur (Ps2, Ps'2), sont assemblés au moyen d'un élément de montage (15, 15') fixé de manière amovible sur le panneau supérieur (Ps1, Ps'1) et disposé à la jonction entre lesdits panneaux adjacents (Ps1,Ps2 ;Ps'1,Ps'2),
dans laquelle ledit élément de montage (15, 15') est configuré pour définir, en combinaison avec la face inférieure dudit panneau supérieur (Ps1, Ps'1), un logement (17, 17') apte à recevoir l'extrémité supérieure dudit panneau inférieur (Ps2, Ps'2).
